# EUROPÄISCHE PATENTSCHRIFT

(11) **EP 2 283 616 B1**
(45) Veröffentlichungstag und Bekanntmachung des Hinweises auf die Patenterteilung: **28.09.2011**
(21) Anmeldenummer: 09711525.7
(22) Anmeldetag: 04.03.2009
(51) Int. Cl.: H04L 12/40, B60W 50/08

(54) **KOMMUNIKATIONSSYSTEM MIT EINEM CAN-BUS UND VERFAHREN ZUM BETREIBEN EINES SOLCHEN KOMMUNIKATIONSSYSTEMS**
COMMUNICATION SYSTEM HAVING A CAN BUS AND METHOD FOR OPERATING SUCH A COMMUNICATION SYSTEM
SYSTÈME DE COMMUNICATION COMPRENANT UN BUS CAN ET UN PROCÉDÉ PERMETTANT DE FAIRE FONCTIONNER UN TEL SYSTÈME DE COMMUNICATION

(30) Priorität: 07.03.2008 DE 102008000561
(43) Veröffentlichungstag der Anmeldung: 16.02.2011
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2009/052527
(87) Internationale Veröffentlichungsnummer: WO 2009/109590

(56) Entgegenhaltungen:
- EP-A- 1 798 936
- DE-A1-102007 016 620
- DE-U1-202006 007 689

## Beschreibung

### Stand der Technik

Die vorliegende Erfindung betrifft ein Kommunikationssystem mit einem CAN (Controller Area Network)-Bus gemäß dem Oberbegriff des Anspruchs 1 und ein Verfahren zum Betreiben eines solchen Kommunikationssystems nach dem Oberbegriff des Anspruchs 10.

Bei der Übertragung von Daten über einen CAN-Bus liegt die maximale Auslastung des Busses in der Praxis üblicherweise bei etwa 50%. Dies liegt unter anderem an dem Protokoll-Overhead des durch den CAN-Bus bedingten physikalischen Protokolls, das heißt der Header-Teil der CAN-Nachrichten kann größer sein als der Nutzdaten-Teil oder Payload-Teil der Nachricht. Wenn bspw. der DLC (Data Length Code) gleich 8 ist, stehen 64 "Paylo-ad"-Bits 1+12+6+16+2+7 = 44 "Header"-Bits gegenüber. Durch Stuff-Bits kann sich das Verhältnis verschlechtern.

Des weiteren ist die derzeit maximal realisierbare Übertragungsrate eines CAN-Busses aufgrund physikalischen Randbedingungen und insbesondere aufgrund von Verzögerungen auf dem CAN-Bus auf etwa 1 Mbit/sec (10⁶ Bit pro Sekunde) beschränkt. Das entspricht einer minimalen Bitzeit von 1 µsec (10⁻⁶ Sekunden). Bei einer höheren Übertragungsrate kann es bei der CAN-Bit-Arbitration, die Kollisionen zwischen Nachrichten verhindert, zu Problemen kommen, da die Signallaufzeiten zwischen den am weitesten voneinander entfernten Knoten dann eine Bitzeit überschreiten. Zudem führt eine höhere Übertragungsrate zu steileren Flanken des übertragenen Signals, was zu einer höheren Abstrahlung und damit verschlechterten EMV-Eigenschaften des Kommunikationssystems führt.

Das Gebrauchsmuster DE 20 2006 007689 U1 offenbart, einen CAN-Bus abhängig von Bandbreiteanforderungen der Kommunikationsteilnehmer zwischen Betriebsmodi mit unterschiedlichen Bandbreiten umzuschalten, wobei in den verschiedenen Modi dasselbe Bus-Protokoll verwendet wird.

Die Anmeldung DE 10 2007 016620 A1 offenbart eine Umschaltung zwischen drei verschiedenen Betriebsmodi eines Kommunikationssystemes, wobei die Auswahl des Modus durch den Nutzer erfolgt

### Offenbarung der Erfindung

Das erfindungsgemäße Kommunikationssystem mit den Merkmalen des Anspruchs 1 und das erfindungsgemäße Verfahren zum Betreiben des Kommunikationssystems mit den

Merkmalen des Anspruchs 10 weisen gegenüber dem bekannten Stand der Technik jeweils den Vorteil auf, dass die Geräte, welche über den CAN-Bus miteinander in Verbindung stehen, dazu geeignet sind, in einem ersten Betriebsmodus CAN-Datenrahmen und in einem zweiten Betriebsmodus ASC (Asynchronous Serial Communication)-Datenrahmen über den CAN-Bus zu übertragen.

Ein besonderer Vorteil der vorliegenden Erfindung liegt darin, dass die ASC-Datenrahmen gegenüber den CAN-Datenrahmen mit einem höheren Bustakt über den CAN-Bus übertragen werden können. Ferner weisen die ASC-Datenrahmen gegenüber den CAN-Datenrahmen einen deutlich kleineren Header-Teil und somit einen größeren Nutzdaten-Teil auf. Bei einer ASC-Datenübertragung kann also eine sehr hohe Nutzdaten-Übertragungsrate erzielt werden, da der Protokoll-Overhead besonders klein ist. Insbesondere kann mit der vorliegenden Erfindung der Protokoll-Overhead von etwa 55% bei CAN-Datenrahmen auf etwa 10% reduziert werden.

Gemäß der vorliegenden Erfindung wird ein Kommunikationssystem vorgeschlagen, welches einen CAN-Bus und zumindest zwei mittels des CAN-Busses gekoppelte Geräte aufweist. Dabei weist ein solches Gerät eine CAN-Steuereinheit (sog. CAN-Controller), eine asynchrone, serielle Kommunikations- (ASC)-Schnittstelleneinheit und ein Schaltmittel auf.

Die jeweilige CAN-Steuereinheit ist dazu geeignet, in einem ersten Betriebsmodus oder Übertragungsmodus CAN-Datenrahmen mittels eines ersten physikalischen Protokolls über den CAN-Bus zu übertragen. Die ASC-Schnittstelleneinheit ist dazu geeignet, in einem zweiten Betriebsmodus oder Übertragungsmodus ASC-Datenrahmen mittels eines zweiten physikalischen Protokolls über den CAN-Bus zu übertragen. Das Schaltmittel ist dazu eingerichtet, zwischen dem ersten Übertragungsmodus und dem zweiten Übertragungsmodus in Abhängigkeit zumindest einer zwischen dem jeweiligen Gerät und zumindest einem weiteren Gerät geltenden Vereinbarung umzuschalten. Das erste und das zweite physikalische Protokoll sind vorzugsweise unterschiedlich.

Zum Hochfahren mindestens eines an den CAN-Bus angeschlossenen Geräts wird dieses während des Hochfahrens in einen dritten Betriebsmodus geschaltet, der sich von dem ersten Betriebsmodus und von dem zweiten Betriebsmodus unterscheidet. Ein Umschalten des Geräts in den dritten Betriebsmodus kann erforderlich sein, wenn das Gerät als einzelnes bspw. nach einem Absturz wieder erneut hochfahren und sich auf die über den CAN-Bus bestehende Kommunikationsverbindung aufsynchronisieren muss oder aber wenn das Gerät zusammen mit allen anderen an den CAN-Bus angeschlossenen Geräte beim Startup des Kommunikationssystems hochgefahren wird. Der dritte Betriebsmodus (sog. Restricted Mode) ist so gewählt, dass das Gerät lediglich eine eingeschränkte Funktionalität hat. Insbesondere werden die in bestimmten Zeitfenstern des Kommunikationszyklus (sog. Basic Cycle) übertragenen ASC-Datenrahmen von dem Gerät im dritten Betriebsmodus nicht zerstört. Dies wird dadurch erreicht, dass weder Error-Frames (oder Error-Flags) noch Overload-Frames (oder Overload-Flags) mit dominantem Bus-Pegel gesendet werden. Das CAN-Protokoll schreibt vor, dass ein CAN-Knoten, der im "Intermission" nach einem Datenrahmen ein dominates Bit empfängt, dieses mit einem Overload-Flag beantwortet. Diese sieht so aus wie ein aktives Error-Flag, selbst dann, wenn der Knoten Error-Passiv ist. Deshalb wird auch die Overload-Funktion im Restricted-Mode unterdrückt.

Dadurch wird verhindert, dass in dem ASC-Zeitfenster ordnungsgemäß übertragene ASC-Datenrahmen, von dem hochzufahrenden Gerät zerstört werden, nur weil das Gerät noch keine Kenntnis darüber hat, in welchem Zeitfenster ASC-Datenrahmen übertragen werden und es die ASC-Datenrahmen fälschlicherweise als fehlerhafte CAN-Datenrahmen interpretiert. Die Kenntnis, wann bzw. in welchem Zeitfenster ASC-Datenrahmen übertragen werden, kann das Gerät erst erhalten, wenn es sich auf die Zeitbasis des Kommunikationssystems aufsynchronisiert hat. Zudem ist ein Fehlerzähler des Geräts für die Dauer des dritten Betriebsmodus eingefroren, das heißt er wird nicht inkrementiert. Das kann sowohl für den Transmit (Tx)- als auch für den Receive (Rx)-Fehlerzähler gelten. Dadurch wird verhindert, dass die in dem ASC-Zeitfenster übertragenen ASC-Datenrahmen zu einem raschen Hochzählen des Fehlerzählers führen und das Gerät noch vor Aufsynchronisierung auf die Zeitbasis des Kommunikationssystems nach Überschreiten eines Fehlergrenzwerts (sog. Error Level) in einen "Error_passiv"- (Error Level 128 überschritten: Gerät sendet keine Error Frames, Zwangspause vor erneutem Senden von Nachrichten) bzw. einen "Bus_off"- (Error Level 256 überschritten: Gerät darf nicht senden) Zustand geschaltet wird. Das heißt also, dass das Gerät im dritten Betriebszustand zwar vermeintlich fehlerhafte, das heißt nicht dem CAN-Protokoll entsprechende, Daten erkennen kann, dies aber jedenfalls nicht zu einem Hochzählen des Fehlerzählers und/oder zu einem Zerstören der vermeintlich fehlerhaften Datenrahmen führt.

Des weiteren wird ein Verfahren zum Betreiben eines Kommunikationssystems mit einem CAN-Bus und mindestens zwei über den CAN-Bus miteinander in Verbindung stehenden Geräten vorgeschlagen, welches die nachfolgenden Schritte umfasst:
a) Umschalten mindestens eines der Geräte zwischen verschiedenen Betriebsmodi, wobei
b) eine CAN-Steuereinheit des Geräts dazu geeignet ist, in einem ersten Betriebsmodus CAN-Datenrahmen mittels eines ersten physikalischen Protokolls über den CAN-Bus zu übertragen, und
c) eine asynchrone, serielle Kommunikations- (ASC)-Schnittstelle des Geräts dazu geeignet ist, in einem zweiten Betriebsmodus ASC-Datenrahmen mittels eines zweiten physikalischen Protokolls über den CAN-Bus zu übertragen, und
d) das Gerät zum Hochfahren in einen von dem ersten Betriebsmodus und dem zweiten Betriebsmodus abweichenden dritten Betriebsmodus umgeschaltet wird.

Vorteilhafte Weiterbildungen und Ausgestaltungen der vorliegenden Erfindung sind in den Unteransprüchen beansprucht.

Gemäß einer bevorzugten Ausführungsform der Erfindung umfasst die Vereinbarung, nach der das Schaltmittel das Gerät zwischen dem ersten Betriebsmodus und dem zweiten Betriebsmodus umschaltet, eine Definition von mindestens einem Zeitfenster eines Kommunikationszyklus, in dem ASC-Datenrahmen übertragen werden. Des weiteren kann die Vereinbarung auch eine Definition von einem oder mehreren vorbestimmten Ereignissen umfassen, in Folge derer ASC-Datenrahmen übertragen werden. Die Schaltmittel schalten also das Gerät in Abhängigkeit von dem aktuellen Zeitfenster und/oder von einem aufgetretenen Ereignis zwischen dem ersten und zweiten Betriebsmodus um.

Gemäß einer anderen Ausgestaltung gibt die Vereinbarung an, in welchem oder welchen vorbestimmten Zeitfenstern und/oder in Abhängigkeit welches oder welcher vorbestimmter Ereignisse das jeweilige Schaltmittel einer vorbestimmten Anzahl von Geräten in den zweiten Betriebsmodus umschaltet und welches der Geräte in einem oder mehreren anschließenden Zeitfenstern eine ausschließliche Sendeberechtigung besitzt.

Gemäß einer weiteren Ausgestaltung ist die Vereinbarung zumindest teilweise als Teil eines in dem jeweiligen Gerät speicherbaren Steuerprogramms und/oder zumindest teilweise als Teil einer über den CAN-Bus übertragbaren Vereinbarungsnachricht ausgebildet.

Des weiteren wird vorgeschlagen, dass in dem zweiten Übertragungsprotokoll Zeitfenster für die Übertragung von Datenrahmen, insbesondere von ASC-Datenrahmen, vorbestimmt sind, in welchen zumindest ein vorbestimmtes Gerät, eine vorbestimmte Anzahl der Geräte oder alle Geräte senden oder empfangen können.

Insbesondere werden in dem zweiten Übertragungsprotokoll in TTCAN (Time Triggered CAN) definierte Zeitfenster für die Übertragung der Datenrahmen vorbestimmt. Durch die Ausgestaltung der vorbestimmten Zeitfenster in dem zweiten Betriebsmodus ist es vorteilhafterweise ermöglicht, garantierte Antwortzeiten auf dem CAN-Bus zu erzielen. Vorteilhafterweise ist die Vereinbarung als zumindest ein in TTCAN definiertes Zeitfenster ausgestaltet oder in zumindest einem in TTCAN definierten Zeitfenster integriert. Vorzugsweise ist der zweite Betriebsmodus gegenüber dem ersten Betriebsmodus priorisiert.

Gemäß einer anderen bevorzugten Ausführungsform der Erfindung ist ein in dem zweiten Betriebsmodus sendendes Gerät mittels des zweiten physikalischen Protokolls dazu geeignet, zu einer vorbestimmten Anzahl empfangender Geräte eine Punkt-zu-Punkt-Verbindung oder eine Punkt-zu-Mehrpunkt-Verbindung auf dem CAN-Bus auszubilden ohne Anwendung der CAN-Bit-Arbitration.

Die CAN-Steuereinheit überträgt die CAN-Datenrahmen vorteilhafterweise in dem ersten Betriebsmodus mit einem ersten Bustakt über den CAN-Bus und überträgt die ASC-Schnittstelleneinheit die ASC-Datenrahmen in dem zweiten Betriebsmodus mit einem zweiten Bustakt über den CAN-Bus, wobei der zweite Bustakt höher als der erste Bustakt ist. Vorzugsweise ist der zweite Bustakt um einen Faktor zwischen 2 und 10, bevorzugt zwischen 5 und 10, besonders bevorzugt zwischen 8 und 10, höher als der erste Bustakt.

Des weiteren weisen ein CAN-Datenrahmen und ein ASC-Datenrahmen jeweils einen Header-Teil und einen Nutzdaten-Teil auf, wobei der Header-Teil des ASC-Datenrahmens kleiner als der Header-Teil des CAN-Datenrahmens ist. Vorzugsweise ist der Header-Teil des ASC-Datenrahmens um einen Faktor zwischen 2 und 5, bevorzugt zwischen 3 und 5, besonders bevorzugt zwischen 4 und 5, kleiner als der Header-Teil des CAN-Datenrahmens.

Gemäß besonders bevorzugter Verwendungen der Erfindung umfassen die zumindest zwei mittels des CAN-Busses gekoppelten Geräte entweder eine Testvorrichtung und mindestens ein Steuergerät eines Kraftfahrzeugs oder mindestens zwei Steuergeräte.

### Kurze Beschreibung der Zeichnungen

Bevorzugte Ausführungsbeispiele der Erfindung sind in den Zeichnungen dargestellt und in der nachfolgenden Beschreibung näher erläutert. Es zeigen:
- Figur 1: ein schematisches Blockschaltbild eines ersten bevorzugten Ausführungs- beispiels eines Kommunikationssystems gemäß der vorliegenden Erfindung;
- Figur 2: ein schematisches Blockschaltbild eines zweiten bevorzugten Ausführungs- beispiels eines Kommunikationssystems gemäß der vorliegenden Erfindung;
- Figur 3: ein schematisches Blockschaltbild eines dritten bevorzugten Ausführungs- beispiels eines Kommunikationssystems gemäß der vorliegenden Erfindung;
- Figur 4a: ein schematisches Blockschaltbild eines bevorzugten Ausführungsbeispiels eines ASC-Datenrahmens;
- Figur 4b: ein schematisches Blockschaltbild eines bevorzugten Ausführungsbeispiels eines CAN-Datenrahmens;
- Figur 5: ein schematisches Ablaufdiagramm eines Verfahrens zum Übertragen von ASC-Datenrahmen über einen CAN-Bus eines Kommunikationssystems; und
- Figur 6: ein schematisches Ablaufdiagramm eines bevorzugten Ausführungsbeispiels des erfindungsgemäßen Verfahrens.

### Beschreibung der Figuren

In den Figuren bezeichnen gleiche Bezugszeichen gleiche oder funktionsgleiche Bestandteile.

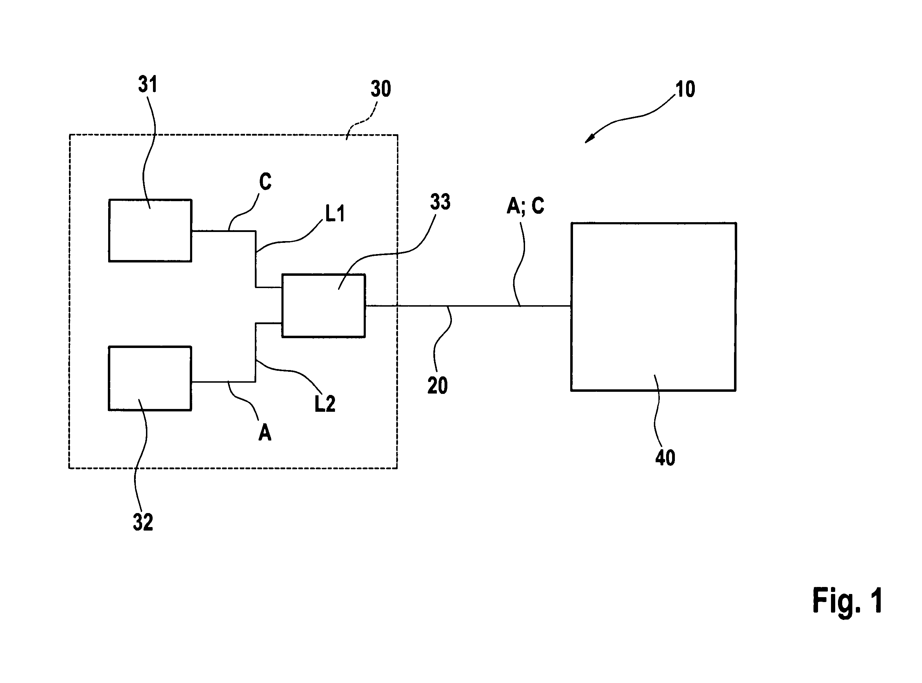

In Figur 1 ist ein erfindungsgemäßes Kommunikationssystem in seiner Gesamtheit mit dem Bezugszeichen 10 bezeichnet. Das Kommunikationssystem 10 umfasst einen CAN-Bus 20, zumindest zwei mittels des CAN-Busses 20 gekoppelte Geräte 30, 40 (sog. Knoten) und ein Schaltmittel 33 auf.

Die zumindest zwei mittels des CAN-Busses 20 gekoppelten Geräte 30, 40 umfassen beispielsweise entweder eine Testvorrichtung und zumindest ein Steuergerät oder mindestens zwei Steuergeräte. Die Testvorrichtung ist vorzugsweise in einer Werkstatt vorgesehen. Die Steuergeräte sind vorzugsweise in einem Kraftfahrzeug vorgesehen. Selbstverständlich kann die vorliegende Erfindung auch in anderen Bereichen außerhalb eines Kraftfahrzeugs, beispielsweise in Flugzeugen, Raumfahrzeugen oder Werkzeugmaschinen, eingesetzt werden.

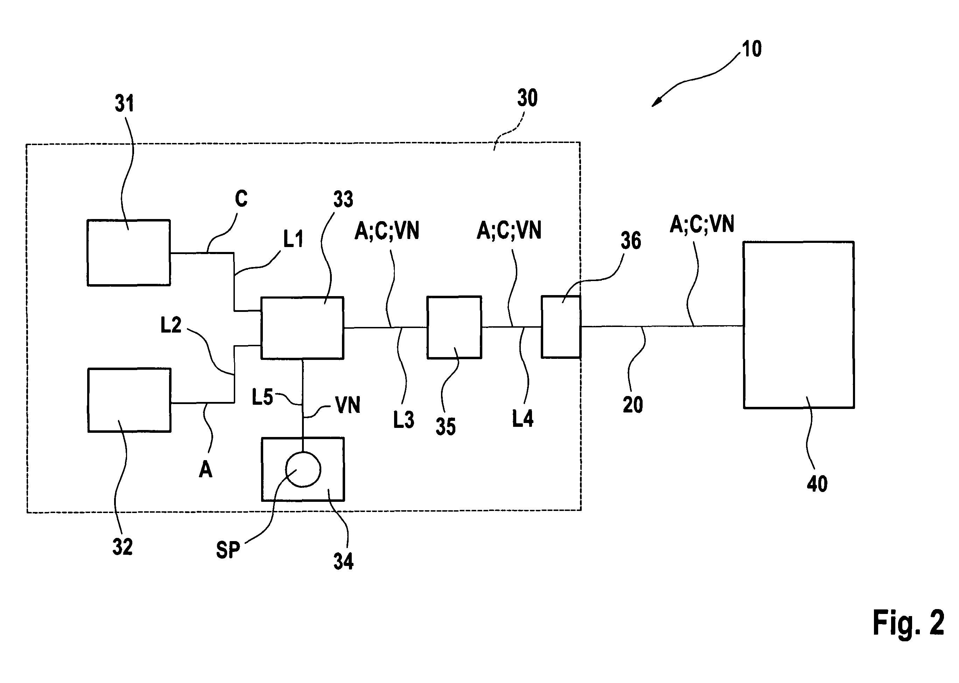

In den Figuren 1 und 2 bezeichnen die Bezugszeichen 30 und 40 beispielsweise zwei Steuergeräte, die identisch ausgebildet sind. Aus Gründen der Übersichtlichkeit ist jeweils nur das erste Steuergerät 30 detailliert dargestellt. Das zweite Steuergerät 40 kann jedoch in entsprechender Weise ausgestaltet sein, ohne dass darauf näher eingegangen wird. Das erste Steuergerät 30 weist eine CAN-Steuereinheit 31 (sog. CAN-Controller), eine asynchrone, serielle Kommunikations- (ASC)-Schnittstelleneinheit 32 (sog. ASC-Controller) und das Schaltmittel 33 auf. Das Schaltmittel 33 und die CAN-Steuereinheit 31 sind über eine erste Leitung L1 gekoppelt. Die CAN-Steuereinheit 31 ist ferner dazu eingerichtet, in einem ersten Betriebsmodus oder Übertragungsmodus CAN-Datenrahmen C mittels eines ersten physikalischen Protokolls über den CAN-Bus 20 zu übertragen. Dazu überträgt die CAN-Steuereinheit 31 die CAN-Datenrahmen C über die erste Leitung L1 zu dem Schaltmittel 33, welches die empfangenen CAN-Datenrahmen C dann an das zweite Steuergerät 40 über den CAN-Bus 20 übertragen kann. Für das Empfangen von über den CAN-Bus 20 übertragenen CAN-Datenrahmen C durch die CAN-Steuereinheit 31 gilt entsprechendes.

Die ASC-Schnittstelleneinheit 32 ist mittels einer zweiten Leitung L2 mit dem Schaltmittel 33 gekoppelt. Die ASC-Schnittstelleneinheit 32 ist dazu eingerichtet, in einem zweiten Betriebsmodus oder Übertragungsmodus ASC-Datenrahmen A mittels eines zweiten physikalischen Protokolls über den CAN-Bus 20 zu übertragen. Dazu überträgt die ASC-Schnittstelleneinheit 32 die ASC-Datenrahmen A über die zweite Leitung L2 zu dem Schaltmittel 33, welches die empfangenen ASC-Datenrahmen A dann an das zweite Steuergerät 40 über den CAN-Bus 20 übertragen kann. Für das Empfangen von über den CAN-Bus 20 übertragenen ASC-Datenrahmen A durch die ASC-Schnittstelleneinheit 32 gilt entsprechendes.

Das Schaltmittel 33 ist dazu eingerichtet, zwischen dem ersten Betriebsmodus und dem zweiten Betriebsmodus in Abhängigkeit zumindest einer zwischen dem ersten Steuergerät 30 und zumindest einem weiteren Gerät, gemäß den Beispielen aus Figuren 1 und 2 dem zweiten Steuergerät 40, geltende Vereinbarung umzuschalten. Die Vereinbarung umfasst dabei vorzugsweise eine Definition, in welchem oder in welchen vorbestimmten Zeitfenstern und/oder in Abhängigkeit welches oder welcher vorbestimmten Ereignisse das jeweilige Schaltmittel 33 einer vorbestimmten Anzahl von Geräten, beispielsweise der beiden Steuergeräte 30, 40 gemäß der Ausführungsbeispiele aus den Figuren 1 und 2, das jeweilige Gerät 30, 40 in den ersten Betriebsmodus oder in den zweiten Betriebsmodus schaltet. Ferner kann die Vereinbarung eine Definition umfassen, in welchem oder in welchen vorbestimmten Zeitfenstern und/oder in Abhängigkeit welches oder welcher vorbestimmten Ereignisse das jeweilige Schaltmittel 33 einer vorbestimmten Anzahl von Geräten, beispielsweise der beiden Steuergeräte 30, 40 gemäß der Ausführungsbeispiele aus den Figuren 1 und 2, das jeweilige Gerät 30, 40 in den zweiten Betriebsmodus oder in den zweiten Betriebsmodus schaltet und welches der Steuergeräte 30, 40 in einem oder mehreren anschließenden Zeitfenstern des Kommunikationszyklus (sog. Basic Cycle) eine ausschließliche Sendeberechtigung erhält. Insbesondere kann die Vereinbarung auch als zumindest ein in TTCAN definiertes Zeitfenster ausgestaltet sein oder in zumindest einem in TTCAN definierten Zeitfenster integriert sein. TTCAN bezeichnet eine sog. "Time Triggered Communication on CAN". TTCAN setzt auf dem CAN-Bus als eigenes Protokoll auf und ermöglicht über höhere Protokollebenen eine zeitliche Ablaufsteuerung der Datenübertragung über den CAN-Bus, insbesondere eine Echtzeitsteuerung des Kommunikationssystems.

Des weiteren ist der zweite Betriebsmodus vorzugsweise gegenüber dem ersten Betriebsmodus priorisiert, d.h. das jeweilige Schaltmittel 33 wird gemäß einer vorbestimmbaren Vorgabe immer dann in den zweiten Betriebsmodus schalten, soweit dies die technischen Randbedingungen erlauben.

Des weiteren ist ein in dem zweiten Übertragungsprotokoll sendendes Gerät, beispielsweise das erste Steuergerät 30, mittels des zweiten physikalischen Protokolls dazu geeignet oder eingerichtet, zu einer vorbestimmten Anzahl empfangender Geräte, beispielsweise dem zweiten Steuergerät 40 und weiterer Geräte (nicht gezeigt), eine Punkt-zu-Punkt-Verbindung oder eine Punkt-zu-Mehrpunkt-Verbindung zur Verhinderung von asymmetrischen Verzögerungen auf dem CAN-Bus 20 auszubilden.

Vorzugsweise überträgt die CAN-Steuereinheit 31 die CAN-Datenrahmen C in dem ersten Betriebsmodus mit einem ersten Bustakt über den CAN-Bus 20. Ferner überträgt die ASC-Schnittstelleneinheit 32 die ASC-Datenrahmen A in dem zweiten Betriebsmodus mit einem zweiten Bustakt über den CAN-Bus 20. Der zweite Bustakt ist vorzugsweise höher als der erst Bustakt, wodurch die mittlere Übertragungsrate über den CAN-Bus 20 gesteigert werden kann. Insbesondere ist der zweite Bustakt um einen Faktor zwischen 2 und 10, bevorzugt zwischen 5 und 10, besonders bevorzugt zwischen 8 und 10, höher als der erste Bustakt.

Figur 2 zeigt ein schematisches Blockschaltbild eines zweiten bevorzugten Ausführungsbeispiels des Kommunikationssystems 10 gemäß der vorliegenden Erfindung. Das zweite Ausführungsbeispiel unterscheidet sich von dem in Figur 1 gezeigten ersten Ausführungsbeispiel insbesondere dahingehend, dass zwischen dem CAN-Bus 20 und dem jeweiligen Schaltmittel 33 eine Treibereinrichtung 35 und eine Schnittstelleneinrichtung oder Kommunikationsschnittstelle 36 angeordnet sind. Die Treibereinrichtung 35 ist mittels einer dritten Leitung L3 mit dem Schaltmittel 33 und mittels einer vierten Leitung L4 mit der Schnittstelleneinrichtung 36 verbunden. Die Schnittstelleneinrichtung 36 ist weiter mittels des CAN-Busses 20 mit dem zweiten Steuergerät 40 und/oder weiteren Steuergeräten (nicht gezeigt) oder einer Testvorrichtung (nicht gezeigt) gekoppelt. Die Treibereinrichtung 35 ist insbesondere als ein CAN-Treiber ausgebildet, der eine bidirektionale Verbindung mit den gewünschten Pegeln zur Schnittstelleneinrichtung 36 ermöglicht.

Das Schaltmittel 33 ist insbesondere als ein programmgesteuerter Schnittstellenumschalter oder auch als Multiplexer ausgestaltet, der eine Umschaltung zwischen der CAN-Steuereinheit 31 und der ASC-Schnittstelleneinheit 32 ermöglicht. Des Weiteren kann gemäß Figur 2 die Vereinbarung, nach der zwischen dem ersten und dem zweiten Betriebsmodus umgeschaltet wird, zumindest teilweise als Teil eines in dem jeweiligen Gerät 30, 40, in dem Beispiel aus Figur 2 in dem ersten Steuergerät 30, speicherbaren Vereinbarungsnachricht VN ausgebildet sein. Zur Speicherung eines Steuerprogramms SP ist beispielsweise eine Speichereinrichtung 34 in die jeweiligen Steuergeräte 30 integriert. Die Speichereinrichtung 34 ist beispielsweise als ein RAM-Speicher oder als ein EEPROM-Speicher ausgebildet. Das Steuerprogramm ist zur Ausführung des erfindungsgemäßen Verfahrens programmiert und koordiniert und steuert den Ablauf des erfindungsgemäßen Verfahrens, wenn es auf einem Rechengerät, insbesondere auf einem Mikroprozessor (nicht dargestellt) des jeweiligen Geräts 30 bzw. der Schaltmittel 33 abgearbeitet wird.

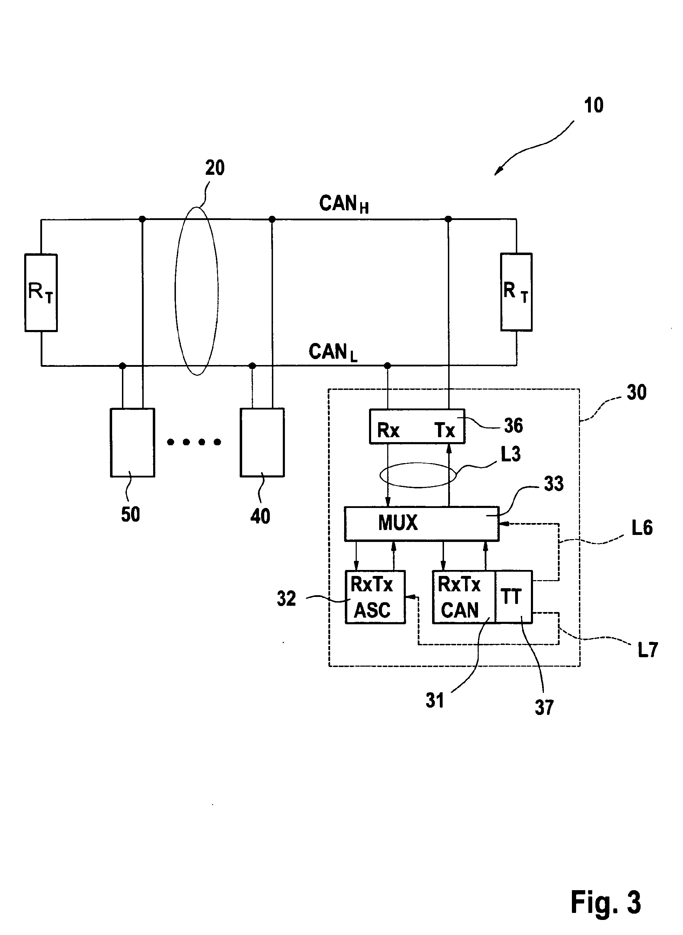

Figur 3 zeigt ein drittes Ausführungsbeispiel eines erfindungsgemäßen Kommunikationssystems 10. Es sind die zwei Leitungen CAN_High (CAN_{H}) und CAN_Low (CAN_{L}) des CAN-Busses 20 dargestellt. An den Enden sind die Leitungen CAN_{H} und CAN_{L} über Abschlusswiderstände (sog. Terminating Resistors; R_{T}) miteinander verbunden. Das System 10 weist neben den beiden Geräten 30, 40 noch weitere Geräte auf, von denen beispielhaft lediglich das Gerät 50 dargestellt ist. Auch hier gilt, dass mindestens ein weiteres Gerät 40, 50 ebenso wie das Gerät 30 mit CAN-Controller 31, ASC-Controller 32 und Schaltmittel 33 ausgebildet ist, um zwischen diesen Geräten 30 und 40; 50 in ausgewählten Zeitfenstern eine asynchrone, serielle Kommunikation über den CAN-Bus 20 zu ermöglichen. Auf das CAN-Protokoll ist das TTCAN-Protokoll 37 aufgesetzt, was in Figur 3 durch das seitliche Anflanschen des TTCAN-Protokolls 37 an den CAN-Controller 31 verdeutlicht ist. Zwischen dem CAN-Controller 31 und dem Schaltmittel 33 ist eine Verbindungsleitung L6 und zwischen dem CAN-Controller 31 und dem ASC-Controller 32 ist eine Leitung L7 ausgebildet. Die Leitungen L6 und L7 dienen zur Ansteuerung des Schaltmittels 33 bzw. des ASC-Controller 32 durch das TTCAN-Protokoll 37. Ansteuerung des CAN-Controllers 31 erfolgt intern ohne zusätzliche Leitungen zwischen Protokoll 37 und CAN-Controller 31.

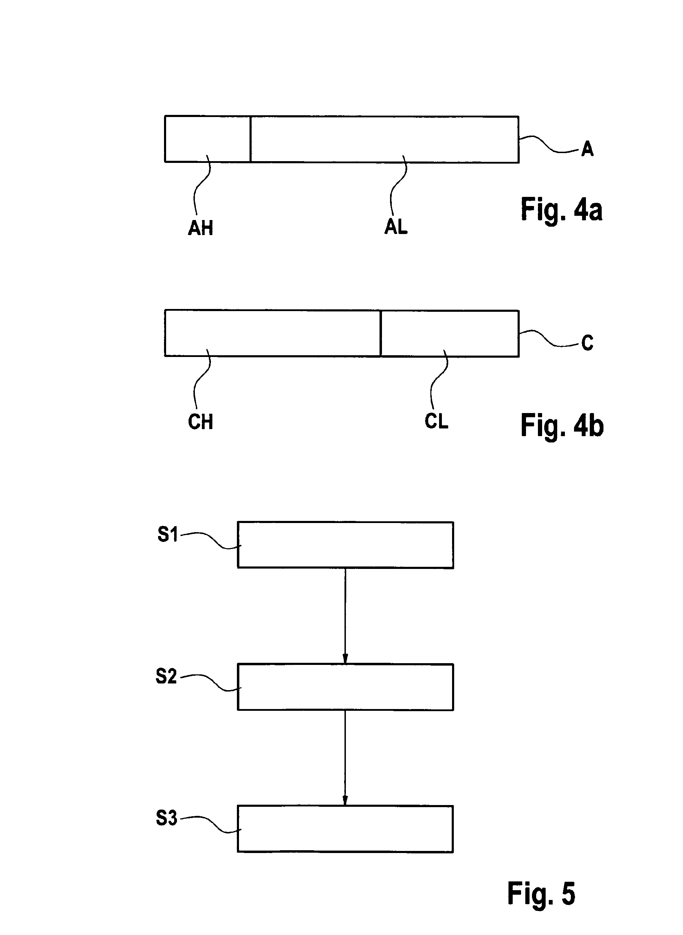

Figur 4a zeigt ein schematisches Blockschaltbild eines Ausführungsbeispiels eines ASC-Datenrahmens A, und Figur 4b zeigt ein schematisches Blockschaltbild eines Ausführungsbeispiels eines CAN-Datenrahmens C. Der CAN-Datenrahmen C und der ASC-Datenrahmen A weisen jeweils einen Header-Teil CH, AH und einen Nutzdaten-Teil CL, AL auf. Der Header-Teil AH des ASC-Datenrahmens A ist kleiner als der Header-Teil CH des CAN-Datenrahmens C. Damit ist ermöglicht, dass der Nutzdatenteil AL des ASC-Datenrahmens A größer als der Nutzdatenteil CL des CAN-Datenrahmens C ist. Somit wird erfindungsgemäß durch die Möglichkeit der Übertragung von ASC-Datenrahmen A über den CAN-Bus 20 in definierten Zeitfenstern des Kommunikationszyklus eine Erhöhung der Datenübertragungsrate erzielt. Vorzugsweise ist der Header-Teil AH des ASC-Datenrahmens A um einen Faktor zwischen 2 und 5, bevorzugt zwischen 3 und 5, besonders bevorzugt zwischen 4 und 5, kleiner als der Header-Teil CH des CAN-Datenrahmens C.

In Figur 5 ist ein schematisches Ablaufdiagramm eines Verfahrens zum Übertragen von ASC-Datenrahmen A über einen CAN-Bus 20 in ausgewählten Zeitfenstern des Kommunikationszyklus eines Kommunikationssystems 10 dargestellt. Nachfolgend wird das Verfahren unter Bezugnahme auf das in Figur 3 dargestellte Kommunikationssystem 10 näher erläutert.

In einem ersten Verfahrensschritt S1 wird das jeweilige Gerät 30, 40, 50 mit der CAN-Steuereinheit 31 (CAN-Controller) ausgestattet. Die CAN-Steuereinheit 31 ist dazu eingerichtet, in einem ersten Betriebsmodus CAN-Datenrahmen C mittels eines ersten physikalischen Protokolls über den CAN-Bus 20 zu übertragen.

In einem zweiten Verfahrensschritt S2 wird das jeweilige Gerät 30, 40, 50 mit der asynchronen, seriellen Kommunikations- (ASC)-Schnittstelleneinheit 32 (ASC-Controller) ausgestattet. Die ASC-Einheit 32 ist dazu eingerichtet, in einem ersten Betriebsmodus ASC-Datenrahmen A mittels eines zweiten physikalischen Protokolls über den CAN-Bus 20 zu übertragen.

In einem dritten Verfahrensschritt S3 wird eine vorbestimmte Anzahl der Geräte 30, 40, 50 zwischen dem ersten Betriebsmodus und dem zweiten Betriebsmodus in Abhängigkeit zumindest einer Vereinbarung umgeschaltet, die zwischen der vorbestimmten Anzahl der Geräte 30, 40, 50 gilt. Das Umschalten zwischen dem ersten und dem zweiten Betriebsmodus erfolgt vorzugsweise durch das Schaltmittel 33.

Die Übertragung von Daten über den CAN-Bus 20 erfolgt nach der vorliegenden Erfindung auf folgende Weise: Auf das CAN-Protokoll ist eine weitere Protokollschicht aufgesetzt, das sog. TTCAN-Protokoll 37. Durch TTCAN erfolgt die Datenübertragung über den CAN-Bus 20 in sich wiederholenden Kommunikationszyklen (sog. Basic Cycles) zeitgesteuert und deterministisch. Ein Kommunikationszyklus ist in mehrere Zeitfenster unterteilt, wobei in jedem Zeitfenster eines der an den CAN-Bus 20 angeschlossenen Geräte 30, 40 die ausschließliche Sendeberechtigung erhält. So kann jederzeit vorhergesagt werden, wann ein bestimmtes Gerät 30, 40 das nächste Mal eine Nachrichten übertragen darf. Die Zugriffsberechtigung der einzelnen Geräte 30, 40, das heißt wann welches Gerät 30, 40 senden darf, ist in einer Matrix definiert, deren Inhalt in den einzelnen Geräten 30, 40 abgelegt ist.

Zur Realisierung der asynchronen Datenübertragung über den CAN-Bus 20 wird mindestens eines der Zeitfenster des Kommunikationszyklus als ASC-Fenster definiert, in dem ASC-Datenrahmen A übertragen werden dürfen. Theoretisch können bis auf das Zeitfenster für die Referenznachrichten alle Zeitfenster eines Kommunikationszyklus als ASC-Fenster definiert und für eine ASC-Kommunikation verwendet werden. Der TTCAN-Controller 37 steuert über die Leitung L6 die Schaltmittel 33, um zwischen der CAN-Steuereinheit 31 und der ASC-Schnittstelleneinheit 32 umzuschalten. Je nach Schaltstellung des Schaltmittels 33 werden die Daten des CAN-Controllers 31 oder des ASC-Controller 32 zur Übermittlung an andere Geräte an den CAN-Bus 20 angelegt oder die vom CAN-Bus 20 empfangenen Daten an den CAN-Controller 31 oder den ASC-Controller 32 zur Weiterverarbeitung geleitet. Das TTCAN-Protokoll 37 aktiviert bzw. deaktiviert auch den CAN-Controller 31 und/oder über die Leitung L7 den ASC-Controller 32. Insbesondere während der ASC-Fenster wird auf die ASC-Schnittstelleneinheit 32 umgeschaltet. Während der übrigen Zeitfenster ist das Kommunikationssystem 10 auf die CAN-Steuereinheit 31 geschaltet und verhält sich wie ein ganz normales TTCAN-Kommunikationssystem. Die Möglichkeit der ASC-Kommunikation über den CAN-Bus 20 bedarf einer Erweiterung des bisherigen, herkömmlichen TTCAN-Protokolls.

Während der ASC-Fenster darf der CAN-Controller die ASC-Datenrahmen A nicht sehen. Aus diesem Grund ist die Fehlerdetektion (sog. Error Detektion) von CAN während der ASC-Fenster deaktiviert. Der CAN Protokoll Controller sieht nur "1" auf dem CAN-Bus 20, was einem Bus Idle-Zustand entspricht. Während der ASC-Fenster erfolgt dann die serielle Kommunikation über den CAN-Bus 20.

Die vorliegende Erfindung betrifft den Fall, dass eines der Geräte 30, 40 während des Betriebs des Kommunikationssystems 10 temporär ausfällt oder heruntergefahren wird und resetted oder erneut hochgefahren werden muss. Insbesondere geht es um eine störungsfreie Integration von zeitweilig stillgelegten Knoten in ein laufendes Kommunikationssystem 10. Während des Reset- bzw. Hochfahrvorgangs muss sich dieses Gerät erst wieder mit dem Gesamtnetzwerk synchronisieren. Zu diesem Zweck hört das Gerät den CAN-Bus 20 ab und wartet auf eine Referenznachricht (sog. Reference Message), die Zeitinformationen enthält. Die Referenznachricht wird am Anfang eines Kommunikationszyklus von einem der Geräte 30, 40, das die derzeitige Time Master Funktion (sog. actual Time Master) inne hat, über den Bus 20 übertragen. Allerdings verfügt das unsynchronisierte Gerät über keine Zeitinformationen und kann somit von dem TTCAN-Controller auch nicht für die Dauer der ASC-Fenster auf die ASC-Schnittstelleneinheit 32 umgeschaltet werden. Ebenso wenig kann die Fehlerdetektion von CAN während der ASC-Fenster deaktiviert werden.

Das führt dazu, dass das Gerät 30, 40, das resetted oder erneut hochgefahren wird, ausschließlich in dem ersten Betriebsmodus betrieben und während der ASC-Fenster nicht in den zweiten Betriebsmodus umgeschaltet wird. Folglich sieht der CAN-Controller die ASC-Datenrahmen A, hält diese für fehlerhafte CAN-Datenrahmen und ein Fehlerzähler wird hochgezählt. Außerdem wird das Gerät 30, 40 die ASC-Datenrahmen A - wie dies im CAN-Protokoll beim Empfang fehlerhafter CAN-Datenrahmen C festgelegt ist - zerstören. Letzten Endes führt das Gerät 30, 40 zu einer empfindlichen Störung der Kommunikation über das Kommunikationssystem 10 und kann gar nicht oder lediglich mit eingeschränkter Funktionalität (nur Empfangsberechtigung, keine Sendeberechtigung) auf das Gesamtnetzwerk synchronisiert werden kann. Die gleichen Probleme können auch auftreten, wenn das gesamte Kommunikationssystem 10 hochgefahren wird und geklärt werden muss, welches der Time Master bzw. Backup Time Master die Referenznachrichten (Zeitinformationen) sendet, und mehrere Geräte auf die vorgegebene Zeit synchronisiert werden müssen. Hier kann die vorliegende Erfindung Abhilfe schaffen.

Erfindungsgemäß wird vorgeschlagen, dass ein Gerät 30, 40, das resetted oder hochgefahren wird, während des Synchronisationsvorgangs in einen dritten Betriebsmodus (sog. Restricted Mode) geschaltet wird, in dem der oder die Fehlerzähler (Tx Error Counter und/oder RX Error Counter) des Geräts 30, 40 eingefroren sind und das Senden von dominanten Fehlerrahmen (sog. Error Frames) durch das Gerät 30, 40 inaktiviert oder blockiert ist. Allerdings kann das Gerät 30, 40 im dritten Betriebsmodus eine CAN-Nachricht, insbesondere eine Bestätigungsnachricht (ACK), senden, wenn es eine fehlerfreie CAN-Datenrahmen C auf dem CAN-Bus 20 gehört hat. Außerdem ist es denkbar, dass das Gerät 30, 40 in dem dritten Betriebsmodus eine CAN-Nachricht, insbesondere eine Referenznachricht (REF), über den CAN-Bus 20 senden kann, wenn das Gerät 30, 40 innerhalb einer vorgegebenen Zeitdauer, insbesondere innerhalb eines Kommunikationszyklus des CAN-Busses 20, keine Referenznachricht (REF) von anderen an den CAN-Bus 20 angeschlossenen Geräten 30, 40 empfangen hat.

Zum Umschalten des Geräts 30, 40, das resetted oder hochgefahren wird, in den dritten Betriebsmodus ist eine Software- oder eine Hardware-Lösung denkbar. Bei der Software-Lösung kann ein bestimmtes Bit (sog. Konfigurationsbit) von der CAN-Steuereinheit 31 während des Synchronisationsvorgangs des Geräts 30, 40 gesetzt werden. Bei der Hardware-Lösung kann das Umschalten zwischen dem dritten Betriebsmodus und anderen Betriebsmodi (z.B. dem ersten oder dem zweiten Betriebsmodus) mit dem Betriebszustand (sog. Sync Mode) des Geräts 30, 40 verknüpft sein. Als Betriebszustände des Geräts 30, 40 sind gemäß TTCAN-Protokoll die Zustände "Sync_Off", "Synchronising", "In_Gap" und "In_Schedule" definiert. Vorzugsweise wird das Gerät 30, 40 in den dritten Betriebsmodus umgeschaltet, wenn sich das Gerät 30, 40 in einem Betriebszustand Sync_Mode = "Sync_Off" oder Sync_Mode = "Synchronising" befindet. Des weiteren wird das Gerät 30, 40 in einen von dem dritten Betriebsmodus abweichenden Betriebsmodus geschaltet, wenn sich das Gerät 30, 40 in einem Betriebszustand Sync_Mode = "In_Gap" oder Sync_Mode = "In_Schedule" befindet.

Zur Realisierung der störungsfreien Integration von zeitweilig stillgelegten Knoten 30, 40 in ein laufendes Multiplex-Kommunikationssystem 10 bedarf es einer Erweiterung des bisherigen, herkömmlichen TTCAN-Protokolls um einige Funktionen. Knoten 30, 40 mit erweitertem TTCAN-Protokoll können in normalen CAN- und TTCAN-Systemen 10 betrieben werden. Wenn die neuen, erweiterten Protokoll-Funktionen vorübergehend abgeschaltet oder deaktiviert werden, kann ein standardisierter CAN-Konformitätstest (CAN-Conformance-Test; ISO 16845) bestanden werden. In Multiplex-Systemen 10 kommt die Kommunikation ohne Eingriffe der Applikations-Software aus, wodurch die Applikations-CPU von zeitkritischen, häufig wiederkehrenden Aufgaben entlastet wird.

In dem neu definierten dritten (eingeschränkten) Betriebsmodus darf ein TTCAN-Knoten 30, 40 nur Referenznachrichten (sog. Reference Messages) und Bestätigungsnachrichten (Acknowledge Bits) senden. Fehlerrahmen (Error Frames) dürfen unabhängig vom Stand des Fehlerzählers (Error Counter) nur mit passive-Error-Flag gesendet werden, Overload-Frames werden ähnlich wie Fehlerrahmen mit passive-Error-Flag anstelle des Overload-Flags gesendet. Im eingeschränkten Betriebsmodus werden die Fehlerzähler weder inkrementiert noch dekrementiert. Dies stellt einen deutlichen Unterschied zu den bisherigen CAN (ISO 11898-1) und TTCAN (ISO 11898-4) Standards dar.

Insbesondere wird vorgeschlagen, dass eine Frame Synchronisation Entity (FSE) des TTCAN-Protokolls um eine Funktion ergänzt wird: Zusätzlich zu den TTCAN-Triggern für die CAN-Nachrichten wird, durch Zeitmarken konfiguriert, basierend auf der Zykluszeit (sog. Cycle Time) des TTCAN-Protokolls, ein Schaltsignal erzeugt, das einerseits die Schaltmittel 33 (den Multiplexer) des Transceivers zwischen CAN und ASC umschaltet und andererseits den TTCAN-Knoten 30, 40 für die Zeitphasen, in denen die asynchrone, serielle Kommunikation über den CAN-Bus 20 aktiv ist, in den dritten (eingeschränkten) Betriebsmodus schaltet. Wahlweise kann zusätzlich auch der Transceiver selbst umgeschaltet werden, um zum Beispiel höhere Bit-Raten im ASC-Betrieb zu ermöglichen.

Mit der vorliegenden Erfindung wird sichergestellt, dass ein TTCAN-Knoten 30, 40, der sich in eine laufende TTCAN-Multiplex-System 10 synchronisieren soll, alle CAN-Nachrichten bzw. CAN-Datenrahmen C versteht und alle ASC-Nachrichten bzw. ASC-Datenrahmen A ignoriert. Sobald der Knoten 30, 40 genügend gut synchronisiert ist, das heißt mindestens zwei aufeinander folgende Referenznachrichten empfangen hat, kann er auch andere Nachrichten senden sowie in den ASC-Zeitfenstern an der asynchronen, seriellen Kommunikation teilnehmen.

Der beschriebene dritte (eingeschränkte) Betriebsmodus kann auch in einem reinen CAN-Multiplex-System verwendet werden, wobei dann die Umschaltung durch andere Mittel, bspw. durch die Applikationssoftware vorgenommen werden muss.

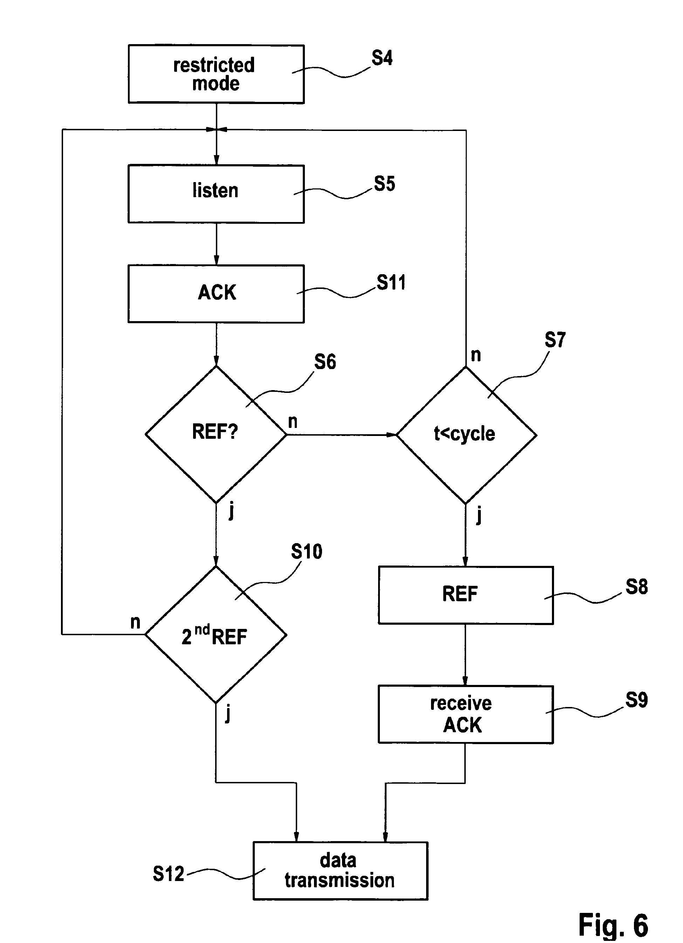

Ein schematisches Ablaufdiagramm des erfindungsgemäßen Verfahrens gemäß einer bevorzugten Ausführungsform ist in Figur 6 dargestellt. Nachfolgend wird das Verfahren unter Bezugnahme auf das in Figur 3 dargestellte Kommunikationssystem 10 näher erläutert.

In einem ersten Verfahrensschritt S4 wird eines der Geräte 30, 40, 50, das zeitweilig stillgelegt war und in das laufende Kommunikationssystem 10 integriert werden soll, in den dritten (eingeschränkten) Betriebsmodus geschaltet. Das bewirkt, dass das Gerät 30, 40, 50 beim Synchronisieren mit dem laufenden Kommunikationssystem 10 alle CAN-Nachrichten C versteht und alle ASC-Nachrichten A ignoriert. Das Umschalten des Geräts 30, 40, 50 in den dritten Betriebsmodus kann anhand eines Konfigurationsbits des CAN-Controllers 31 oder in Abhängigkeit von dem Betriebszustand des Geräts erfolgen.

In einem zweiten Verfahrensschritt S5 hört das Gerät 30, 40, 50 den CAN-Bus 20 ab und wartet auf CAN-Nachrichten C, insbesondere auf Referenznachrichten REF, welche jeweils den Anfang eines Kommunikationszyklus anzeigen. ASC-Nachrichten A werden von dem Gerät 30, 40, 50 ignoriert, da es sich im dritten Betriebsmodus befindet. Wenn das Gerät 30, 40, 50 eine CAN-Nachricht empfangen hat, sendet es während des dritten Betriebsmodus in einem anschließenden Verfahrensschritt S11 eine Bestätigungsnachricht ACK über den CAN-Bus 20, um den ordnungsgemäßen Empfang der Nachricht zu bestätigen, insbesondere um dem aktuellen Time Master den ordnungsgemäßen Empfang der Zeitinformationen, mitzuteilen. Jede fehlerfreie empfangene CAN-Nachricht wird im Restricted Mode mit einem ACK-Bit quittiert, sei es eine Referenznachricht REF, eine Kalibrationsnachricht oder eine beliebig andere Nachricht.

In einem nachfolgenden Abfrageschritt S6 wird geprüft, ob eine Referenznachricht REF empfangen wurde oder nicht. Falls nein, wird in einem weiteren Abfrageschritt S7 überprüft, ob eine vorgegebene Zeitspanne, vorzugsweise die Zeit (t) eines Kommunikationszyklus (cycle), bereits vergangen ist. Falls nein, wird wieder zu dem Verfahrensschritt S5 verzweigt und weiter der CAN-Bus 20 abgehört.

Falls in dem Abfrageschritt S7 festgestellt wird, dass die Zeit eines Kommunikationszyklus bereits verstrichen ist, kann davon ausgegangen werden, dass entweder kein anderes Gerät an den CAN-Bus 20 angeschlossen ist oder dass die anderen angeschlossenen Geräte keine Time Master sind, also keine Zeitinformationen vorgeben können. Deshalb versucht das Gerät 30, 40, 50 in einem Verfahrensschritt S8 selbst, die Time Master Funktion zu übernehmen und sendet selbst eine Referenznachricht REF. Sobald das Gerät 30, 40, 50 dann in Verfahrensschritt S9 eine Bestätigungsnachricht ACK von einem der anderen an den CAN-Bus 20 angeschlossenen Geräte empfängt (nachdem dieses Gerät die Referenznachricht REF empfangen hat), weiß es, dass es der aktuelle Time Master ist.

Falls in dem Abfrageschritt S6 festgestellt wird, dass eine Referenznachricht REF empfangen wurde, wird in einem nachfolgenden Abfrageschritt S10 geprüft, ob dies bereits die zweite aufeinander folgend empfangene Referenznachricht REF ist. Falls nein, wird wieder zu dem Verfahrensschritt S5 verzweigt und weiter der CAN-Bus 20 abgehört. Falls die in Verfahrensschritt S5 empfangene CAN-Nachricht jedoch bereits die zweite aufeinander folgende Referenznachricht REF ist, wird in den normalen Betriebsmodus zur Datenübertragung in einem Verfahrensschritt S12 übergegangen.

In dem Verfahrensschritt S12 erfolgt die Datenübertragung über den CAN-Bus 20 in der Weise, dass die Daten in den Zeitfenstern des Kommunikationszyklus nach dem CAN-Protokoll übertragen werden (im ersten Betriebsmodus) und in ausgewählten Zeitfenstern des Kommunikationszyklus die Daten nicht nach dem CAN-Protokoll, sondern asynchron und seriell (im zweiten Betriebsmodus), unter Umständen sogar mit einer höheren Bustaktrate, übertragen werden. Das Gerät 30, 40, 50, das in das laufende Kommunikationssystem 10 integriert worden ist, arbeitet dabei entweder als normaler Knoten (linker Pfad des Ablaufdiagramms aus Figur 6) oder als Time Master Knoten (rechter Pfad).

## Patentansprüche

1. Kommunikationssystem (10) mit:
a. einem CAN-Bus (20);
b. mindestens zwei mittels des CAN-Busses (20) miteinander in Verbindung stehenden Geräten (30, 40), wobei mindestens eines der Geräte (30; 40) aufweist:
i. eine CAN-Steuereinheit (31), welche dazu geeignet ist, in einem ersten Betriebsmodus CAN-Datenrahmen (C) mittels eines ersten physikalischen Protokolls über den CAN-Bus (20) zu übertragen;
ii. eine asynchrone, serielle Kommunikations- (ASC)-Schnittstelleneinheit (32), welche dazu geeignet ist, in einem zweiten Betriebsmodus ASC-Datenrahmen (A) mittels eines zweiten physikalischen Protokolls über den CAN-Bus (20) zu übertragen;
iii. ein erstes Schaltmittel (33), welches dazu geeignet ist, zwischen dem ersten Betriebsmodus und dem zweiten Betriebsmodus in Abhängigkeit zumindest einer zwischen dem Gerät (30; 40) und mindestens einem anderen der Geräte (30; 40) geltenden Vereinbarung umzuschalten; und
iv. ein weiteres Schaltmittel, welches dazu geeignet ist, zum Hochfahren des Geräts (30; 40) dieses in einen von dem ersten Betriebsmodus und dem zweiten Betriebsmodus abweichenden dritten Betriebsmodus umzuschalten.

2. Kommunikationssystem (10) nach Anspruch 1, **dadurch gekennzeichnet, dass** ein Fehlerzähler des Geräts (30; 40) in dem dritten Betriebsmodus angehalten ist und weder Error-Frames noch Overload-Frames mit dominantem Bus-Pegel gesendet werden.

3. Kommunikationssystem (10) nach Anspruch 1 oder 2, **dadurch gekennzeichnet, dass** das Gerät (30; 40) in dem dritten Betriebsmodus den CAN-Bus (20) auf CAN-Nachrichten (C), insbesondere auf Referenznachrichten, von anderen an den CAN-Bus (20) angeschlossenen Geräten (40; 30) abhört.

4. Kommunikationssystem (10) nach Anspruch 3, **dadurch gekennzeichnet, dass** das Gerät (30; 40) in dem dritten Betriebsmodus eine CAN-Nachricht (C), insbesondere eine Bestätigungsnachricht, sendet, wenn es eine fehlerfreie CAN-Nachricht, insbesondere einen fehlerfreien CAN-Datenrahmen (C), auf dem CAN-Bus (20) gehört hat.

5. Kommunikationssystem (10) nach einem der Ansprüche 1 bis 4, **dadurch gekennzeichnet, dass** das Gerät (30; 40) in dem dritten Betriebsmodus eine CAN-Nachricht (C), insbesondere eine Referenznachricht, über den CAN-Bus (20) sendet, wenn es innerhalb einer vorgegebenen Zeitdauer, insbesondere innerhalb eines Kommunikationszyklus des CAN-Busses (20), keine Referenznachricht von anderen an den CAN-Bus (20) angeschlossenen Geräten (30; 40) empfangen hat.

6. Kommunikationssystem (10) nach einem der Ansprüche 1 bis 5, **dadurch gekennzeichnet, dass** das weitere Schaltmittel das Gerät (30; 40) mittels eines speziellen Konfigurationsbits in den dritten Betriebsmodus umschaltet.

7. Kommunikationssystem (10) nach einem der Ansprüche 1 bis 5, **dadurch gekennzeichnet, dass** das weitere Schaltmittel das Gerät (30; 40) in Abhängigkeit von einem Betriebszustand des Geräts (30; 40) automatisch in den dritten Betriebsmodus umschaltet.

8. Kommunikationssystem (10) nach Anspruch 7, **dadurch gekennzeichnet, dass** das weitere Schaltmittel das Gerät (30; 40) in den dritten Betriebsmodus umschaltet, wenn sich das Gerät (30; 40) in einem Betriebszustand Sync_Mode = "Sync_Off" oder Sync_Mode = "Synchronising" befindet.

9. Kommunikationssystem (10) nach Anspruch 7, **dadurch gekennzeichnet, dass** das weitere Schaltmittel das Gerät (30; 40) in den ersten oder zweiten Betriebsmodus umschaltet, wenn sich das Gerät (30; 40) in einem Betriebszustand Sync_Mode = "In_Gap" oder Sync_Mode = "In_Schedule" befindet.

10. Verfahren zum Betreiben eines Kommunikationssystems (10) mit einem CAN-Bus (20) und mindestens zwei über den CAN-Bus (20) miteinander in Verbindung stehenden Geräten (30, 40), umfassend die nachfolgenden Schritte:
a) Umschalten mindestens eines der Geräte (30; 40) in Abhängigkeit zumindest einer zwischen dem Gerät (30; 40) und mindestens einem anderen der Geräte (30; 40) geltenden Vereinbarung zwischen verschiedenen Betriebsmodi, wobei
b) durch eine CAN-Steuereinheit (31) des Geräts (30; 40) in einem ersten Betriebsmodus CAN-Datenrahmen (C) mittels eines ersten physikalischen Protokolls über den CAN-Bus (20) übertragen werden, und
c) durch eine asynchrone, serielle Kommunikations- (ASC)-Schnittstelleneinheit (32) des Geräts (30; 40) in einem zweiten Betriebsmodus ASC-Datenrahmen (A) mittels eines zweiten physikalischen Protokolls über den CAN-Bus (20) übertragen werden, wobei
d) das Gerät (30; 40) zum Hochfahren in einen von dem ersten Betriebsmodus und dem zweiten Betriebsmodus abweichenden dritten Betriebsmodus umgeschaltet wird.

## Claims

1. Communication system (10) having:
a. a CAN bus (20);
b. at least two devices (30, 40) which are connected to one another by means of the CAN bus (20), wherein at least one of the devices (30; 40) has:
i. a CAN control unit (31) which is suitable for transmitting CAN data frames (C) via the CAN bus (20) using a first physical protocol in a first mode of operation;
ii. an asynchronous serial communication (ASC) interface unit (32) which is suitable for transmitting ASC data frames (A) via the CAN bus (20) using a second physical protocol in a second mode of operation;
iii. a first switching means (33) which is suitable for changing over between the first mode of operation and the second mode of operation on the basis of at least one agreement that is applicable between the device (30; 40) and at least one other of the devices (30; 40); and
iv. a further switching means which is suitable for changing over the device (30; 40) to a third mode of operation, which is different from the first mode of operation and from the second mode of operation, in order to start up said device.

2. Communication system (10) according to Claim 1, **characterized in that** an error counter in the device (30; 40) is stopped in the third mode of operation and neither error frames nor overload frames with a dominant bus level are sent.

3. Communication system (10) according to Claim 1 or 2, **characterized in that** in the third mode of operation the device (30; 40) monitors the CAN bus (20) for CAN messages (C), particularly for reference messages, from other devices (40; 30) connected to the CAN bus (20).

4. Communication system (10) according to Claim 3, **characterized in that** in the third mode of operation the device (30; 40) sends a CAN message (C), particularly an acknowledgement message, when it has heard an error-free CAN message, particularly an error-free CAN data frame (C), on the CAN bus (20).

5. Communication system (10) according to one of Claims 1 to 4, **characterized in that** in the third mode of operation the device (30; 40) the device (30; 40) sends a CAN message (C), particularly a reference message, via the CAN bus (20) when it has received no reference message from other devices (30; 40) connected to the CAN bus (20) within a prescribed period, particularly within one communication cycle of the CAN bus (20).

6. Communication system (10) according to one of Claims 1 to 5, **characterized in that** the further switching means changes over the device (30; 40) to the third mode of operation using a special configuration bit.

7. Communication system (10) according to one of Claims 1 to 5, **characterized in that** the further switching means changes over the device (30; 40) to the third mode of operation automatically on the basis of an operating state of the device (30; 40).

8. Communication system (10) according to Claim 7, **characterized in that** the further switching means changes over the device (30; 40) to the third mode of operation when the device (30; 40) is in a Sync_Mode = "Sync_Off" or Sync_Mode = "Synchronising" operating state.

9. Communication system (10) according to Claim 7, **characterized in that** the further switching means changes over the device (30; 40) to the first or second mode of operation when the device (30; 40) is in a Sync_Mode = "In_Gap" or Sync_Mode = "In_Schedule" operating state.

10. Method for operating a communication system (10) having a CAN bus (20) and at least two devices (30, 40) which are connected to one another via the CAN bus (20), comprising the following steps:
a) at least one of the devices (30; 40) is changed over between different modes of operation on the basis of at least one agreement that is applicable between the device (30; 40) and at least one other of the devices (30; 40), wherein
b) a CAN control unit (31) in the device (30; 40) transmits CAN data frames (C) via the CAN bus (20) using a first physical protocol in a first mode of operation, and
c) an asynchronous serial communication (ASC) interface unit (32) of the device (30; 40) transmits ASC data frames (A) via the CAN bus (20) using a second physical protocol in a second mode of operation, wherein
d) the device (30; 40) is changed over to a third mode of operation, which is different from the first mode of operation and from the second mode of operation, in order to start it up.

## Revendications

1. Système de communication (10) comprenant :
a. un bus CAN (20) ;
b. au moins deux appareils (30, 40) qui sont reliés entre eux au moyen du bus CAN (20), au moins l'un des appareils (30, 40) présentant :
i. une unité de commande CAN (31) qui est conçue pour, dans un premier mode de fonctionnement, transmettre des trames de données CAN (C) au moyen d'un premier protocole physique par le biais du bus CAN (20) ;
ii. une unité d'interface de communication série asynchrone (ASC) (32) qui est conçue pour, dans un deuxième mode de fonctionnement, transmettre des trames de données ASC (A) au moyen d'un deuxième protocole physique par le biais du bus CAN (20) ;
iii. des premiers moyens de commutation (33) qui sont conçus pour permuter entre le premier mode de fonctionnement et le deuxième mode de fonctionnement en fonction d'au moins un accord convenu entre l'appareil (30 ; 40) et au moins un autre des appareils (30 ; 40) ; et
iv. des moyens de commutation supplémentaires qui sont conçus pour permuter l'appareil (30 ; 40) dans un troisième mode de fonctionnement, différent du premier mode de fonctionnement et du deuxième mode de fonctionnement, pour faire démarrer celui-ci.

2. Système de communication (10) selon la revendication 1, **caractérisé en ce qu'**un compteur d'erreurs de l'appareil (30 ; 40) est arrêté dans le troisième mode de fonctionnement et ni des trames d'erreur, ni des trames de surcharge ne sont envoyées avec un niveau de bus dominant.

3. Système de communication (10) selon la revendication 1 ou 2, **caractérisé en ce que** l'appareil (30 ; 40), dans le troisième mode de fonctionnement, est à l'écoute du bus CAN (20), à la recherche de messages CAN (C), notamment de messages de référence provenant d'autres appareils (40 ; 30) raccordés au bus CAN (20).

4. Système de communication (10) selon la revendication 3, **caractérisé en ce que** l'appareil (30 ; 40), dans le troisième mode de fonctionnement, émet un message CAN (C), notamment un message de confirmation, lorsqu'il a entendu sur le bus CAN (20) un message CAN exempt d'erreur, notamment une trame de données CAN (C) exempte d'erreur.

5. Système de communication (10) selon l'une des revendications 1 à 4, **caractérisé en ce que** l'appareil (30 ; 40), dans le troisième mode de fonctionnement, émet un message CAN (C), notamment un message de référence, par le biais du bus CAN (20) lorsqu'il n'a reçu aucun message de référence de la part des autres appareils (30 ; 40) raccordés au bus CAN (20) pendant une durée prédéfinie, notamment au sein d'un cycle de communication du bus CAN (20).

6. Système de communication (10) selon l'une des revendications 1 à 5, **caractérisé en ce que** les moyens de commutation supplémentaires permutent l'appareil (30 ; 40) dans le troisième mode de fonctionnement au moyen d'un bit de configuration spécial.

7. Système de communication (10) selon l'une des revendications 1 à 5, **caractérisé en ce que** les moyens de commutation supplémentaires permutent automatiquement l'appareil (30 ; 40) dans le troisième mode de fonctionnement en fonction d'un état opérationnel de l'appareil (30 ; 40).

8. Système de communication (10) selon la revendication 7, **caractérisé en ce que** les moyens de commutation supplémentaires permutent l'appareil (30 ; 40) dans le troisième mode de fonctionnement lorsque l'appareil (30 ; 40) se trouve dans un état opérationnel Sync_Mode = « Sync-Off » ou Sync_Mode = « Synchronisation ».

9. Système de communication (10) selon la revendication 7, **caractérisé en ce que** les moyens de commutation supplémentaires permutent l'appareil (30 ; 40) dans le premier ou le deuxième mode de fonctionnement lorsque l'appareil (30 ; 40) se trouve dans un état opérationnel Sync_Mode = «In_Gap» ou Sync_Mode = « In_Schedule ».

10. Procédé pour faire fonctionner un système de communication (10) comprenant un bus CAN (20) et au moins deux appareils (30, 40) qui sont reliés entre eux au moyen du bus CAN (20), comprenant les étapes suivantes :
a) permutation d'au moins l'un des appareils (30 ; 40) entre différents modes de fonctionnement en fonction d'au moins un accord convenu entre l'appareil (30 ; 40) et au moins un autre des appareils (30 ; 40), procédé selon lequel
b) dans un premier mode de fonctionnement, des trames de données CAN (C) sont transmises par une unité de commande CAN (31) de l'appareil (30 ; 40) au moyen d'un premier protocole physique par le biais du bus CAN (20), et
c) dans un deuxième mode de fonctionnement, des trames de données ASC (A) sont transmises par une unité d'interface de communication série asynchrone (ASC) (32) de l'appareil (30 ; 40) au moyen d'un deuxième protocole physique par le biais du bus CAN (20),
d) l'appareil (30 ; 40), pour démarrer, étant permuté dans un troisième mode de fonctionnement, différent du premier mode de fonctionnement et du deuxième mode de fonctionnement.
